# EUROPÄISCHE PATENTSCHRIFT

(11) **EP 0 906 840 B1**
(45) Veröffentlichungstag und Bekanntmachung des Hinweises auf die Patenterteilung: **02.01.2004**
(21) Anmeldenummer: 98118733.9
(22) Anmeldetag: 05.10.1998
(51) Int. Cl.: B60G 9/00, B60T 1/06, B60G 7/00, B60G 21/055

(54) **Achsaufhängung für Fahrzeuge**
Axle suspension for vehicles
Suspension d'essieux pour véhicules

(30) Priorität: 04.10.1997 DE 19743898; 10.10.1997 DE 19744670
(43) Veröffentlichungstag der Anmeldung: 07.04.1999
(73) Patentinhaber: Otto Sauer Achsenfabrik Keilberg, 63856 Bessenbach-Keilberg (DE)
(72) Erfinder: Dantele, Johann, 97525 Schwebheim (DE); Hennrich, Thomas, 63939 Wörth (DE); Frey, Christopher, 63768 Hösbach (DE)
(74) Vertreter: KEIL & SCHAAFHAUSEN

(56) Entgegenhaltungen:
- EP-A- 0 402 777
- EP-A- 0 830 960
- DE-A- 19 632 515
- FR-A- 2 678 867
- FR-A- 2 729 615

## Beschreibung

Die Erfindung betrifft eine Achsaufhängung für Fahrzeuge wie sie aus der europäischen Patentanmeldung EP-A-830 960 bekannt ist, die einen Stand der Technik nach Artikel 54(3) EPÜ darstellt und daher nur bezüglich der Nenheit zu betrachten ist. Diese weist wenigstens je einen im wesentlichen in Fahrzeuglängsrichtung verlaufenden Achslenker beidseits der Fahrzeuglängsmittelebene auf, welcher mit seinem vorderen Ende an einem chassisfesten Lagerpunkt angelenkt und im Abstand davon mit dem Achskörper verbunden ist, wobei vorzugsweise ein von dem Achskörper aus jeweils nach hinten ragender Achslenkerabschnitt als unteres Lager einer Luftfeder dient, auf deren Oberseite sich das Fahrzeugchassis abstützt, sowie eine Scheibenbremse, insbesondere Schwimmsattel-Sattelbremse für das jeweils zugeordnete Rad, wobei der jeweilige Achslenker eine Aussparung aufweist, in der Bauteile der Fahrzeugbremse untergebracht sind.

Aufgabe der vorliegenden Erfindung ist es, die bekannt Achsaufhängung so auszugestalten, dass bei einfacher Montage eine sichere Unterbringung der empfindlichen Teile der Zuspanneinrichtung der Scheibenbremse vorgesehen ist.

Diese Aufgabe wird erfindungsgemäß mit den Merkmalen des Anspruchs 1 gelöst. Damit liegt der Bremszylinder geschützt vor Beschädigungen, was insbesondere für Fahrzeuge, welche auch im Gelände gefahren werden, von Bedeutung ist. Andererseits bleibt der Bremszylinder aber einfach montierbar und leicht zugänglich. Die Achslenker können dabei vorteilhafterweise aus Blechprofilen gebildet sein, aus welchen die Aussparungen ausgeschnitten sind. Es ist auch denkbar, aus Stabilitätsgründen die Achslenker jeweils aus zwei im Abstand voneinander im wesentlichen parallelen vertikalen Seitenwangen zu bilden, wobei die Seitenwangen entsprechend ausgeschnitten sind.

Die Aussparung liegt vorzugsweise in Fahrtrichtung vor dem Achskörper, so dass der Bremszylinder mit seinen Zuleitungen verhältnismäßig nahe an dem jeweiligen Lagerpunkt des Achslenkers liegt und daher nur geringe Bewegungen ausführt.

Um zu erreichen, dass der Achslenker durch die Aussparung für die Aufnahme des Bremszylinders der Zuspanneinrichtung der Scheibenbremse nicht ernsthaft geschwächt wird, liegt die Aussparung bei einer bevorzugten Ausgestaltung der Erfindung in der neutralen Zone der Beanspruchung des Achslenkers.

Des weiteren ist es von Vorteil, wenn auch die Zuleitungen des jeweiligen Bremszylinders wenigstens teilweise in der Aussparung liegen und damit gegen die oben erwähnten Einflüsse geschützt sind. Dabei geht es nicht nur um die pneumatischen, sondern auch etwaige hydraulische und elektrische Zuleitungen, z.B. für bestimmte Sensoren, wie Verschleißsensoren, der Bremse.

Bei einer weiteren besonderen Ausgestaltung der Erfindung liegen die bremszylinderseitigen Anschlüsse der Zuleitungen des jeweiligen Bremszylinders zwischen dem Bremszylinder und dem Lagerpunkt des Achslenkers. Auch hierdurch wird (zusätzlich) sichergestellt, dass die Zuleitungen des Bremszylinders wegen ihrer Nähe zum Lagerpunkt des jeweiligen Achslenkers nur geringfügigen Bewegungen während des Ein- und Ausfederns ausgesetzt sind. Diese Positionierung stellt ferner sicher, dass die Zuleitungen mit anderen Fahrzeugteilen, wie Querträger, Stoßdämpfer etc. nicht kollidieren.

Die Anschlüsse der Zuleitungen des jeweiligen Bremszylinders können unterschiedlich ausgestaltet sein, so bspw. zur Aufnahme von bisher üblichen Gummigewebedruckschläuchen. Erfindungsgemäß sind sie jedoch vorzugsweise als Steckverbindungen z.B. für Kunststoffrohrleitungen ausgebildet, um eine schnellele und zuverlässige Montage und Demontage zu gewährleisten.

Gemäß einem weiteren bevorzugten Erfindungsmerkmal sind die Zuleitungen des jeweiligen Bremszylinders wenigstens teilweise in Hohlräumen des Achslenkers bzw. an dem Achslenker verlegt. Dem Fahrzeugbauer kann auf diese Weise der Achslenker als Moduleinheit einschließlich Zufuhrleitungen angeliefert werden, so dass die Montage vor Ort vereinfacht ist.

Dem gleichen Zweck dient die weitere erfindungsgemäß bevorzugt vorgesehene Maßnahme, wonach die in bzw. an dem jeweiligen Achslenker verlaufenden Zuleitungen einerseits in achslenkerfesten Anschlußbuchsen in der Nähe des Lagerpunktes und andererseits in achslenkerfesten Anschlußbuchsen in der Nähe der Scheibenbremse münden. Der Fahrzeugbauer braucht daher nur noch die Versorgungsleitungen z.B. für Druckluft und Elektrizität an den entsprechenden Kupplungsstellen einzustecken.

Damit werden die Leitungsverlegungskosten am Fahrzeug weiter reduziert.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung.

Es zeigen:
- Fig. 1: eine schematische Seitenansicht einer die Erfindung aufweisenden Fahrzeugachsaufhängung im Bereich einer Seite einer (im Vertikalschnitt zu sehenden) Fahrzeugachse, wobei die Anordnung am gegenüberliegenden Ende des Achskörpers ebenso ausgebildet ist,
- Fig. 2a bis 4b: in Seitenansicht bzw. Draufsicht verschiedene andere Ausgestaltungen der erfundenen Achsaufhängung.

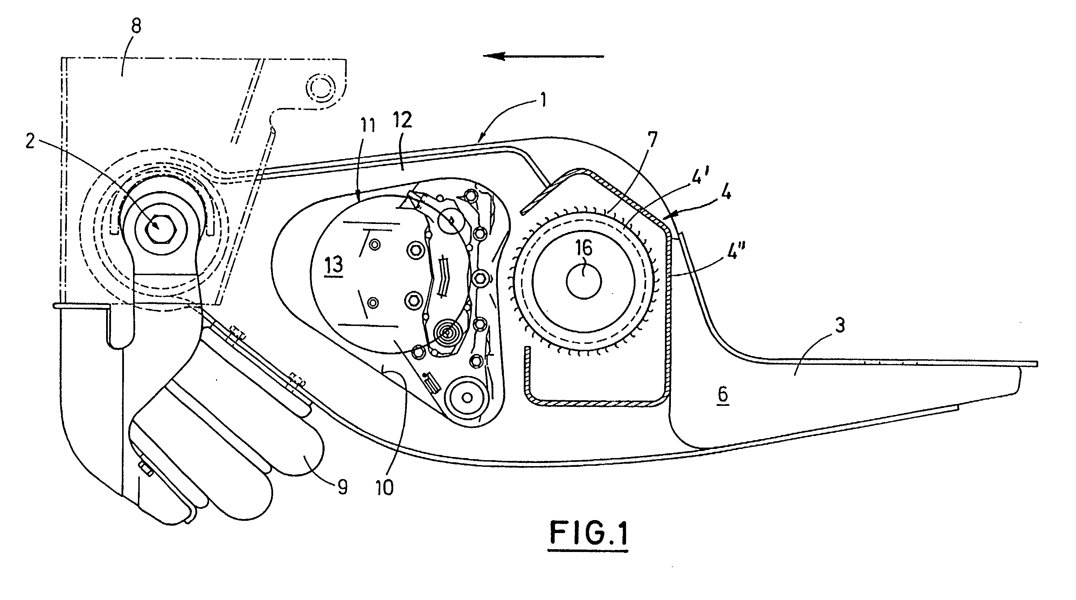

Die dargestellte erfindungsgemäße Achsaufhängung für Fahrzeuge hat beidseits der Fahrzeuglängsmittelebene je einen im wesentlichen in Fahrzeuglängsrichtung verlaufenden Achslenker 1. Die Achslenker 1, von welchen in den Figuren jeweils nur einer zu sehen ist, sind an ihrem in Fahrtrichtung vorderen Ende an einem chassisfesten Lagerpunkt 2 angelenkt. Der Lagerpunkt 2 ist in dem dargestellten Fall von einem an dem Fahrzeugchassis befestigten Lagerbock 8 vorgesehen. Der Lagerbock 8 dient dabei gemäß Fig. 1 u.a. auch der Abstützung der Achslenker 1 über eine Luftfeder 9 einer Achsanhebevorrichtung. Im Abstand hinter dem Lagerpunkt 2 sind die Achslenker 1 mit einem Achskörper 4 verschweißt. Ein von dem Achskörper 4 aus jeweils nach hinten ragender Achslenkerabschnitt 3 kann als unteres Lager einer (in Fig. 1 nicht dargestellten) Luftfeder 5 dienen, auf deren Oberseite sich das Fahrzeugchassis abstützt.

In dem in Fig. 1 dargestellten Ausführungsbeispiel ist der Achskörper 4 von zwei in bzw. an die Achslenker 1 geschweißten, senkrecht von diesen nach außen abstehenden Achsstummeln 4' und einer Quertraverse 4'' gebildet. In Fig. 1 sind das innere stirnseitige Ende eines Achsstummels 4' in Draufsicht und die Quertraverse 4'' im Schnitt wiedergegeben. Die Quertraverse 4'' ist von einem zu den Achsstummeln 4' koaxialen bzw. achsparallelen offenen Profil aus abgekantetem Blech gebildet. Dabei bildet die Quertraverse 4 " mit den beiden Achslenkern 1 einen U-Stabilisator nach Art einer Verbundfederachse. Aufgrund der Ausbildung der Quertraverse 4'' als offenes Profil kann es einerseits torsionsweich und andererseits biegesteif sein, so dass vorteilhafte Fahreigenschaften sowohl bei gleichmäßigem als auch bei ungleichmäßigem Einfedern der Fahrzeugräder erreicht werden. Im speziellen Fall ist die Quertraverse 4'' von einem nach vorne offenen C-Profil gebildet. Dieses ist besonders einfach in der Herstellung.

Die Achslenker 1 können, was aus Fig. 1 nicht ersichtlich ist, jeweils zwei im Abstand voneinander im wesentlichen parallele vertikale Seitenwangen 6 aufweisen, von welchen in Fig. 1 die eine innere Seitenwange 6 zu sehen ist. Die Achsstummel 4' sind wenigstens durch die jeweils äußere Seitenwange 6 im wesentlichen formschlüssig hindurchgeführt und liegen in ihrem stirnseitigen inneren Ende an der Außenseite der inneren Seitenwange 6 an. Dabei ist der Achsstummel 4' sowohl mit der äußeren Seitenwange 6 des Achslenkers 1 als auch mit der inneren Seitenwange 6 mittels um den Achsstummel 4' umlaufenden Schweißlinien 7 verschweißt, und zwar vorzugsweise sowohl auf der Außenseite als auch auf der Innenseite der äußeren Seitenwange 6, und dann natürlich auch mit der Außenseite der inneren Seitenwange 6, an welche der Achsstummel 4' mit seinem inneren Ende anstößt.

Bei dem Ausführungsbeispiel gemäß Fig. 1 ist der Achsstummel 4' auch durch die innere Seitenwange 6 des Achslenkers 1 hindurchgeführt, so dass er nur geringfügig über die Innenseite der inneren Seitenwange 6 hinausragt. In diesem Fall ist der Achsstummel 4' dann auch sowohl auf der Außenseite als auch auf der Innenseite der inneren Seitenwange 6 mit dieser über umlaufende Schweißlinie 7 verschweißt. Die Quertraverse 4" braucht nur mit der jeweils inneren Seitenwange 6 der Achslenker 1 verbunden zu sein.

Entsprechend der Darstellung in Fig. 1 weist der jeweilige Achslenker 1 eine Aussparung 10 auf, in welcher der jeweilige Bremszylinder der Zuspanneinrichtung der Scheibenbremse 11 untergebracht ist. Dabei ist die Aussparung 10 in Fahrtrichtung vor dem Achskörper 4 vorgesehen. Sie liegt außerdem in der neutralen Zone der Beanspruchung des Achslenkers 1. Ferner ist dafür Sorge getragen, dass der Bremszylinder 13 in Höhe der Verbindungslinie zwischen dem Lagerpunkt 2 und dem Mittelpunkt 16 des Achskörpers 4 liegt.

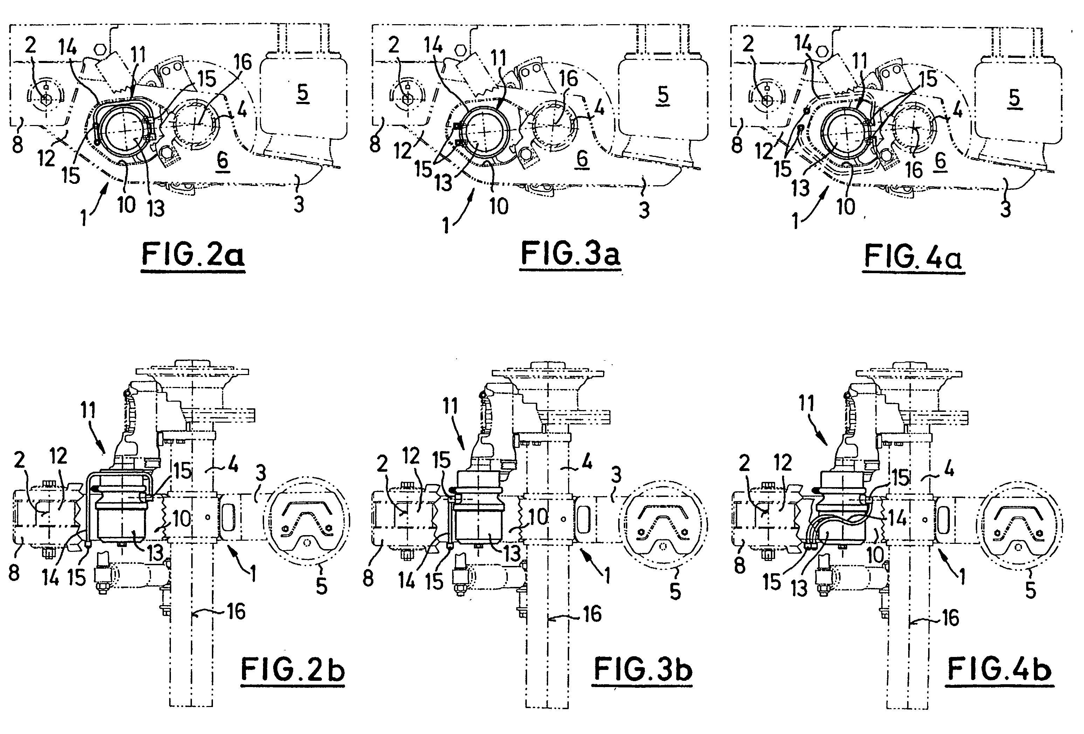

In den Fig. 2a bis 4b sind drei verschiedene Ausgestaltungen einer die Erfindung aufweisenden Achsaufhängung veranschaulicht, welche sich im wesentlichen nur durch die Anordnung der Zuleitungen 14 zu dem jeweiligen Bremszylinder 13 voneinander unterscheiden. Abweichend von Fig. 1 ist hier der Achskörper 4 von einem durchgehenden Achsrohr gebildet, welches in den Seitenwangen 6 der Achslenker 1 aufgenommen ist. In jedem Fall ist ist dafür Sorge getragen, dass diese Zuleitungen 14 wenigstens teilweise ebenfalls in der Aussparung 10 untergebracht sind und damit geschützt liegen. Die bremszylinderseitigen Anschlüsse 15 der Zuleitungen 14 des jeweiligen Bremszylinders 13 liegen vorzugsweise zwischen dem Bremszylinder 13 und dem Lagerpunkt 2 des Achslenkers 1, damit diese beim Ein- und Ausfedern möglichst geringen Bewegungen ausgesetzt sind. Dabei sind die Anschlüsse 15 der Zuleitungen 14 des jeweiligen Bremszylinders 13 vorzugsweise als Steckverbindungen z.B. für Kunststoffrohrleitungen ausgebildet. Die Zuleitungen 14 des jeweiligen Bremszylinders 13 können ferner wenigstens teilweise, also in ihrem Abschnitt vor der Aussparung 10, in bzw. an dem Achslenker 1 verlaufen, so dass die Achslenker 1 entsprechend vormontiert dem Fahrzeugbauer angeliefert werden können. Dabei treten bspw. die Zuleitungen 14 benachbart dem Lagerpunkt 2 in einen Hohlraum des Achslenkers 1 ein und aus letzterem benachbart der Aussparung 10, in welcher der Bremszylinder 13 untergebracht ist, wieder aus. Die in bzw. an dem jeweiligen Achslenker 1 verlaufende Zuleitungen 14 münden dabei vorzugsweise einerseits in achslenkerfesten Anschlußbuchsen in der Nähe des Lagerpunktes 2 und andererseits in achslenkerfesten Anschlußbuchsen in der Nähe der Scheibenbremse 11, so dass an die entsprechenden Anschlußbuchsen lediglich noch die entsprechenden Versorgungsleitungen für bspw. Druckluft und Elektrizität, bzw. die Verbindungsleitungen zu dem Bremszylinder und den zugeordneten Sensoren angeschlossen werden müssen.

### Bezugszeichenliste

- 1: Achslenker
- 2: Lagerpunkt
- 3: hinterer Achslenkerabschnitt
- 4: Achskörper
- 4': Achsstummel
- 4'': Quertraverse
- 5: Luftfeder
- 6: Seitenwangen
- 7: Schweißlinien
- 8: Lagerbock
- 9: Luftfeder für Achslift
- 10: Aussparung
- 11: Scheibenbremse
- 12: vorderer Achslenkerabschnitt
- 13: Bremszylinder
- 14: Zuleitungen
- 15: Anschlüsse
- 16: Mittelpunkt

## Patentansprüche

1. Achsaufhängung für Fahrzeuge, mit wenigstens je einem im wesentlichen in Fahrzeuglängsrichtung verlaufenden Achslenker (1) beidseits der Fahrzeuglängsmittelebene, welcher mit seinem vorderen Ende an einem chassisfesten Lagerpunkt (2) angelenkt und im Abstand davon mit dem Achskörper (4) verbunden ist, wobei vorzugsweise ein von dem Achskörper (4) aus jeweils nach hinten ragender Achslenkerabschnitt (3) als unteres Lager einer Luftfeder (16) dient, auf deren Oberseite sich das Fahrzeugchassis abstützt, sowie mit einer Scheibenbremse, (11), insbesondere Schwimmsattel-Scheibenbremse, wobei der jeweilige Achslenker (1) eine Aussparung (10) aufweist, in welcher der jeweilige Bremszylinder (13) der Zuspanneinrichtung der Scheibenbremse (11) untergebracht ist.

2. Achsaufhängung nach Anspruch 1, **dadurch gekennzeichnet, dass** die Aussparung (10) in Fahrtrichtung vor dem Achskörper (4) liegt.

3. Achsaufhängung nach Anspruch 1 oder 2, **dadurch gekennzeichnet, dass** die Aussparung (10) in der neutralen Zone der Beanspruchung des Achslenkers (1) liegt.

4. Achsaufhängung nach einem der vorhergehenden Ansprüche, **dadurch gekennzeichnet, dass** der Bremszylinder (13) in Höhe der Verbindungslinie zwischen dem Lagerpunkt (2) und dem Mittelpunkt des Achskörpers (4) liegt.

5. Achsaufhängung nach einem der vorhergehenden Ansprüche, **dadurch gekennzeichnet, dass** auch die Zuleitungen (14) des jeweiligen Bremszylinders (13) wenigstens teilweise in der Aussparung (10) liegen.

6. Achsaufhängung nach einem der vorhergehenden Ansprüche, **dadurch gekennzeichnet, dass** die bremszylinderseitigen Anschlüsse (15) der Zuleitungen (14) des jeweiligen Bremszylinders (13) zwischen dem Bremszylinder (13) und dem Lagerpunkt (2) des Achslenkers (1) liegen.

7. Achsaufhängung nach einem der vorhergehenden Ansprüche, **dadurch gekennzeichnet, dass** die Anschlüsse (15) der Zuleitungen (14) des jeweiligen Bremszylinders (13) als Steckverbindungen z.B. für Kunststoffrohrleitungen ausgebildet sind.

8. Achsaufhängung nach einem der vorhergehenden Ansprüche, **dadurch gekennzeichnet, dass** die Zuleitungen (14) des jeweiligen Bremszylinders (13) wenigstens teilweise in bzw. an dem Achslenker (1) verlaufen.

9. Achsaufhängung nach einem der vorhergehenden Ansprüche, **dadurch gekennzeichnet, dass** die in bzw. an dem jeweiligen Achslenker (1) verlaufenden Zuleitungen (14) einerseits in achlenkerfesten Anschlußbuchsen in der Nähe des Lagerpunktes (2) und andererseits in achslenkerfesten Anschlußbuchsen in der Nähe der Scheibenbremse (11) münden.

## Claims

1. An axle suspension for vehicles with at least one axle guide (1 ) running essentially along the longitudinal direction of the vehicle on each of both sides of the longitudinal central plane of the vehicle, which is coupled via its front end to a chassis fixed bearing point (2) and is connected to the axle shaft (4) at a distance there from, wherein preferably, an axle guide section (3), which extends backwardly from the axle shaft (4) respectively, serves as a lower bearing of a pneumatic spring (16), the vehicle chassis resting on its upper side, and with a disk brake (11 ), in particular a floating calliper disk brake, wherein the respective axle guide (1 ) comprises a recess (10), in which the respective brake cylinder (13) of the brake application device of the brake disk (11) is accommodated.

2. An axle suspension according to claim 1, **characterised in that** the recess (10) is located in front of the axle shaft (4) in the direction of driving.

3. An axle suspension according to claim 1 or 2, **characterised in that** the recess (10) is located in the neutral load zone of the axle guide (1 ).

4. An axle suspension according to one of the preceding claims, **characterised in that** the brake cylinder (13) is located at the height of the connecting line between the bearing point (2) and the centre of the axle shaft (4).

5. An axle suspension according to one of the preceding claims, **characterised in that** the feed lines (14) of the respective brake cylinder (13) are also at least partially located in the recess (10).

6. An axle suspension according to one of the preceding claims, **characterised in that** the brake cylinder side ports (15) of the feed lines (14) of the respective brake cylinder (13) are located in between the brake cylinder (13) and the bearing point (2) of the axle guide (1).

7. An axle suspension according to one of the preceding claims, **characterised in that** the ports (15) of the feed lines (14) of the respective brake cylinder (13) are formed as plug-in connections e.g. for plastic pipe lines.

8. An axle suspension according to one of the preceding claims, **characterised in that** the feed lines (14) of the respective brake cylinder (13) run at least partially inside respectively along the axle guide (1).

9. An axle suspension according to one of the preceding claims, **characterised in that** the feed lines (14) running inside respectively along the respective axle guide (1 ) run into axle guide fixed connecting ports near the bearing point (2) on one side and run into axle guide fixed connecting ports near the disk brake (11 ) on the other side.

## Revendications

1. Suspension d'essieux pour véhicules avec au moins un guide d'essieu (1 ) de chacun des deux côtés du plan central longitudinal du véhicule s'étendant essentiellement en direction longitudinale du véhicule, lequel est articulé à travers son extrémité antérieure à un point d'appui (2) fixé au châssis et lié à distance de celui-ci au corps d'essieu (4), une section (3) du guide d'essieu qui s'étend en arrière à partir du corps d'essieu (4) servant de préférence comme appui inférieur d'un amortisseur pneumatique (16), sur le côté supérieur duquel s'appuie le châssis du véhicule, ainsi qu'un frein à disque (11 ), en particulier un frein à disque à étrier flottant, le guide d'essieu (1) respectif comportant un dégagement (10) dans lequel le cylindre de frein (13) respectif du dispositif d'application du frein à disque (11 ) est logé.

2. Suspension d'essieux selon la revendication 1, **caractérisée en ce que** le dégagement (10) est situé à l'avant du corps d'essieu (4) en direction de conduite.

3. Suspension d'essieux selon la revendication 1 ou 2, **caractérisée en ce que** le dégagement (10) est situé dans la zone de charge neutre du guide d'essieu (1 ).

4. Suspension d'essieux selon une des revendications précédentes, **caractérisée en ce que** le cylindre de frein (13) est situé à la hauteur de la ligne de jonction entre le point d'appui (2) et le centre du corps d'essieu (4).

5. Suspension d'essieux selon une des revendications précédentes, **caractérisée en ce que** les conduites d'alimentation (14) du cylindre de frein (13) respectif sont aussi situées au moins en partie dans le dégagement (10).

6. Suspension d'essieux selon une des revendications précédentes, **caractérisée en ce que** les branchements (15) du côté du cylindre de frein des conduites d'alimentation (14) du cylindre de frein (13) respectif sont situés entre le cylindre de frein (13) et le point d'appui (2) du guide d'essieu (1 ).

7. Suspension d'essieux selon une des revendications précédentes, **caractérisée en ce que** les branchements (15) des conduites d'alimentation (14) du cylindre de frein (13) respectif sont réalisés en forme de connexions enfichables par exemple pour des tuyaux conducteur en plastique.

8. Suspension d'essieux selon une des revendications précédentes, **caractérisée en ce que** les conduites d'alimentation (14) du cylindre de frein (13) respectif s'étendent au moins en partie à l'intérieur respectivement au long du guide d'essieu (1 ).

9. Suspension d'essieux selon une des revendications précédentes, **caractérisée en ce que** les conduites d'alimentation (14) s'étendant à l'intérieur respectivement au long du guide d'essieu (1) respectif débouchent d'un côté dans des douilles de jonction fixées au guide d'essieu près du point d'appui (2) et de l'autre côté dans des douilles de jonction fixées au guide d'essieu près du frein à disque (11 ).
